Europäisches Patentamt

European Patent Office

Office européen des brevets

(11) Veröffentlichungsnummer: **0 079 068 B1**

# (12) EUROPÄISCHE PATENTSCHRIFT

(45) Veröffentlichungstag der Patentschrift:
**29.10.86**

(21) Anmeldenummer: **82110261.3**

(22) Anmeldetag: **06.11.82**

(51) Int. Cl.⁴: **B 62 D 33/00**, B 62 D 63/08

(54) **Anhänger für Kraftfahrzeuge.**

(30) Priorität: **10.11.81 DE 8132786 U**

(43) Veröffentlichungstag der Anmeldung:
**18.05.83 Patentblatt 83/20**

(45) Bekanntmachung des Hinweises auf die Patenterteilung:
**29.10.86 Patentblatt 86/44**

(84) Benannte Vertragsstaaten:
**BE FR NL**

(56) Entgegenhaltungen:
**DE - C - 802 212**
**DE - U - 7 126 992**

**Metallbearbeitung, Band II, Seiten 34, 35, 1970 Gießen**

(73) Patentinhaber: **Westfalia-Werke Franz Knöbel & Söhne KG, Am Sandberg 45, D-4840 Rheda-Wiedenbrück (DE)**

(72) Erfinder: **Koglin, Klaus, Flurstrasse 16, D-4410 Warendorf (DE)**
Erfinder: **Braun, Dieter, Robert-Schumann-Strasse 6, D-4840 Rheda-Wiedenbrück (DE)**

(74) Vertreter: **Meldau, Gustav, Dipl.-Ing. et al, Patentanwalt Dipl.-Ing. Gustav Meldau Dipl.-Phys. Dr. H.-J. Strauss Postfach 2452, D-4830 Gütersloh 1 (DE)**

## Beschreibung

Die Erfindung bezieht sich auf einen ein- oder tandemachsiger Anhänger für Kraftfahrzeuge, mit einer Plattform, die von Seitenwänden begrenzt ist, die aus mit Metall-Profil-Rahmen umgebenen Platten bestehen, wobei das Profil der Rahmen zueinander parallele Schenkel aufweist zur Auflage auf der Aussen- und Innenfläche der Platte im Randbereich, wobei das Profil ein von einem Schenkel abgewinkeltes Mittelteil aufweist, das gegen die Kante der Platte anliegt und in den anderen Schenkel den Ecken der zu umrahmenden Platte entsprechend, mit Gehrungsschnitten versehen und abgewinkelt ist.

Ein Anhänger dieser Art ist z.B. aus der Patentschrift DE-C-802 212 bekannt.

Insbesondere bei Anhängern von Kraftfahrzeugen, die zum Transport von Lasten verwendet werden, wurde bisher der Aufbau vielfach derart ausgebildet, dass die dafür verwendeten Platten mit einem U-förmigen Profil oder auch nur einem Winkelprofil aus Metall umgeben wurden. Dieses Profil hatte im wesentlichen die Aufgabe, den Schutz der Plattenkanten zu übernehmen – es leistete keinen wesentlichen Beitrag zur Festigkeit des gesamten Aufbaus. Aus diesem Grunde wurden auch die Verbindungen der einzelnen Platten miteinander, beispielsweise die Eckverbindungen zwischen Seiten und Hinterwand oder auch die Eckverbindung zwischen Boden und Seitenwänden derart ausgeführt, dass dafür gesonderte Beschläge verwendet wurden, die im wesentlichen mit den die eigentlichen Wände bildenden Platten verbunden waren und nur in wenigen Fällen zusätzliche Verbindungen mit den die Platten umgebenden Profilen aufwiesen. Dadurch ergab sich insgesamt eine besondere Bauart, die von der Konstruktion und der Montage besondere Anforderungen stellte und insgesamt verhältnismässig umständlich und auch schwer war. Nicht nur das Gewicht des Anhängers wurde dadurch zu Ungunsten der Nutzlast erhöht, sondern es waren auch die Kosten für Herstellung und Reparaturen wesentlich höher.

Bekannt ist auch ein Profilstab oder -Rahmen, insbesondere für Kunststoffplatten oder dgl., mit einem flachen Mittelsteg und zwei rechtwinklig zu diesen verlaufenden Schenkeln, von denen mindestens einer zum anderen Schenkel hin derart gekröpft bzw. gebogen ist, dass der Abstand der parallel zueinander verlaufenden Schenkelteile der Dicke der zwischen ihnen zu befestigenden Platte entspricht (DE-U-7 126 992). Dieser bekannte Profilstab oder -Rahmen bildet einen Kantenschutz für die genannten Kunststoffplatten. Er besteht aus Leichtmetall. Die Profile bzw. Rahmen sind insbesondere an den Ecken durch besonders eingesetzte Einlagen verstärkt, um einerseits überhaupt eine haltbare Eckverbindung zu erreichen, andererseits jedoch auch um den Rahmen selbst diejenige Festigkeit zu geben, die das Profil insbesondere an den Ecken in rauhen Betrieb haben muss, um hohen Beanspruchungen, insbesondere bei Verwendung in einem Anhängeraufbau auszustehen. Die Profile sind in den Eckverbindungen in jedem Fall mit einem Gehrungsschnitt getrennt. Die übliche Eckverbindung erfolgt durch besondere Eckverbinder, vorzugsweise aus Stahl, die in entsprechende vorbereitete Führungen innerhalb der Leichtmetall-Profilstäbe eingesetzt sind.

Die Erfindung hat sich die Aufgabe gestellt, die genannten Nachteile und auch weitere Nachteile bekannter Anhängeraufbauten zu vermeiden und einen Anhänger für Kraftfahrzeuge zu schaffen, dessen Einzelteile sich darüber hinaus in gewissem Umfang standardisieren lassen, die daher untereinander austauschbar sind und auch erlauben, verschiedenartige Aufbauten mit teilweise gleichen Einzelelementen auszuführen.

Zur Lösung dieser Aufgabe ist ein Anhänger der gattungsgemässen Art dadurch gekennzeichnet, dass das Mittelteil des Profils die Kante der Platte auf einer Seite um einen Betrag überragt, der mindestens etwa der halben Plattenstärke entspricht und zur Platte hin abgewinkelt, in den anderen Schenkel ausläuft, wobei zumindest das Mittelteil des Profils des Rahmens ohne Unterbrechung in den Rahmenecken abgewinkelt ist und, dass die Befestigung der Rahmen an der Platte mittels quer durchgeführter Schrauben erfolgt und zur Herstellung einer rechtwinkligen Verbindung zweier Seitenwände entweder die quer durch die Platte einer ersten Seitenwand und daran anliegende Profilschenkel geführte Schraube durch ein im Bereich der Stirnkante der Platte einer zweiten Seitenwand im Profil angeordnetes Durchgangsloch in eine im Inneren des Profils angeordnete Schweissmutter eingeschraubt ist oder bei in das Profil an der Platte der zweiten Seitenwand eingesetztem Schraubenkopf ist der Schraubenschaft durch das im Bereich der Stirnkante der zweiten Platte im Profil angeordnete Durchgangsloch und sodann im Bereich der anliegenden Schenkel durch die Platte der ersten Seitenwand geführt und ausserhalb dieser Platte mit einer Mutter versehen.

Durch die vorstehend beschriebene Art der Ausbildung der Profile wird erreicht, dass diese Profile eine wesentlich höhere Festigkeit aufweisen und dass daher die von den Profilen umgebenen Platten wesentlich dünner sein können, weil sie erheblich von Kräften entlastet sind. Derart dünnere Platten können auch vorteilhaft derart ausgebildet werden, dass sie wesentlich widerstandsfähiger gegen andere Einflüsse, wie beispielsweise Feuchtigkeit, Nässe, Temperaturen u.dgl., sind. Die Ausbildung der Rahmenprofile ergibt den weiteren Vorteil, dass die Flächen der Platten durch die nach aussen vorstehenden Rahmenkanten wesentlich besser gegen mechanische Einwirkungen, besonders im Verkehr geschützt sind und dass diese Rahmenkanten auch benutzt werden können, um besondere Verbindungen herzustellen.

Dazu ist der Metall-Profil-Rahmen an seinen Schenkeln, den Ecken der zu umrahmenden Platte entsprechend, mit Gehrungsausschnitten versehen und abgewinkelt. Dadurch ist ein materieller Zusammenhang sämtlicher Rahmenteile erreicht und eine entsprechend bessere Kraftflussübermittlung. Nach einer vorteilhaften Ausbildung ist vorzugsweise auf einer Langseite der Platte das Rahmenprofil im Abstand von den Ecken beendet und zwischen diese Enden ein gerades Profilstück eingesetzt. Dabei können die Enden des die Platte umgebend gewinkelten Rahmenteils an der Stelle der Platte liegen, an der sie von der Hälfte eines aufgeschraubten oder -genieteten Beschlages überdeckt sind, wobei die andere Hälfte des Beschlages die Enden des eingesetzten geraden Profilstückes überdeckt.

Nach einer anderen vorteilhaften Ausführungsform kann der Rahmen aus zwei Teilen bestehen, deren Enden an zwei einander gegenüberliegenden Seitenkanten der Platte gegeneinanderstossen. Der Rahmen kann auch aus einem Teil bestehen und mit seinen beiden Enden im Verlauf einer Seitenkante der Platte aneinanderstossen.

Es ist erkennbar, dass durch die verschiedenen, vorstehend beschriebenen Rahmenausführungen der Rahmen aus wenigen bzw. einem Teil besteht, so dass nicht nur die Herstellung wesentlich einfacher und günstiger, sondern dass auch der Kraftfluss innerhalb der Einzelstücke des Rahmens gewährleistet ist.

Vorzugsweise sind die Stossstellen der Enden des Rahmens derart ausgebildet und angeordnet, dass dort Beschläge angesetzt sind, wie Scharniere, Schliesshaken o.dgl., die mit Befestigungslaschen je zur Hälfte die beiden aneinanderstossenden Rahmenenden überdecken und deren Befestigungsmittel in Form von Schrauben, Nieten o.dgl. durch die auf der Platte aufliegenden Schenkel des Beschlages hindurchgeführt sind. Beschläge und/oder Verbindungsmittel sind mittels Schrauben, Nieten o.dgl. an dem Rahmen befestigt, die durch Löcher hindurchgeführt sind, die in dem über die Plattenkante hinausstehenden Teil des Rahmenprofils, parallel zur Plattenebene verlaufend, angeordnet sind. Auch mit dieser Anordnung wird eine wesentliche Verbesserung der allgemeinen Festigkeit erreicht, denn ohne zusätzliche Massnahmen sind die nicht vermeidbaren Rahmenstösse derart miteinander verbunden, dass dafür beispielsweise Beschlagteile verwendet werden, so dass eine metallische Verbindung zwischen den Rahmenstössen vorhanden ist.

Im Randbereich der Platte sind vorzugsweise Verbindungsschrauben mit ihren Schraubenköpfen oder Schweissmuttern derart fest eingesetzt, dass sie von dem über die Plattenkante hinausstehenden Teil des Rahmenprofils überdeckt sind. Dafür kann im Bereich der in das Rahmenprofil eingesetzten Schrauben, Muttern oder Nieten eine Einprägung vorgesehen sein, die die Profilwandung um etwa ihre Stärke nach innen versetzt. Durch diese, durch das besondere Rahmenprofil nach der Neuerung ermöglichte Anbringung von Verbindungsmitteln wird u.a. erreicht, dass diese Verbindungsmittel gegen jegliche nachteilige Einflüsse hervorragend geschützt sind. An wesentlichen Stellen bilden die Verbindungsmittel keine Vorsprünge, die beispielsweise zu Unfällen Anlass geben können.

Vorteilhaft sind die Aussenkanten der beiden zueinander parallelen Schenkel gegeneinander nach innen gebogen. Auch dadurch werden Unfälle vermieden. Die Verbindung zwischen dem Rahmenprofil und der Platte wird verbessert.

Nach der Erfindung ist ein Rahmenprofil für die Anhängerplattform, das im wesentlichen als, die Plattform an ihren Kanten umgreifendes U-Profil ausgebildet ist, mit dem oberen Schenkel in der Breite von etwa dem Rahmenprofil der aufstehenden Seitenkanten anliegend und dahinter, nach oben abgewinkelt, und bis über die Höhe des Wandrahmenprofils reichend, während der untere Schenkel die Anlagefläche des oberen, an der Plattform überragt. Der nach oben abgewinkelte Schenkel ist mit der Seitenwand mittels Schrauben oder Nieten verbunden, die diesen Schenkel sowie die beiden Schenkel der Seitenwandumrahmung und die dazwischen liegende Platte durchdringen. Durch diese Anordnung wird eine erhebliche Steigerung der Festigkeit der Verbindungen der Plattform bzw. Kastenbodens mit den Seitenwandungen erreicht, weil Profilteile des Rahmens der Plattform mit Profilteilen des Rahmens der Seitenwände parallel und unmittelbar aufeinanderliegen, so dass zu der Verbindung mittels Verbindungsmitteln eine teilweise formschlüssige Verbindung hinzutritt. Eine Erhöhung der Steifigkeit und Festigkeit und so auch ein gegenseitiger Schutz gegen nachteilige Witterungseinflüsse ist die Folge.

Die Erfindung wird nachstehend anhand von Ausführungsbeispielen mit Bezug auf die Zeichnungen näher erläutert. In den Zeichnungen zeigen:

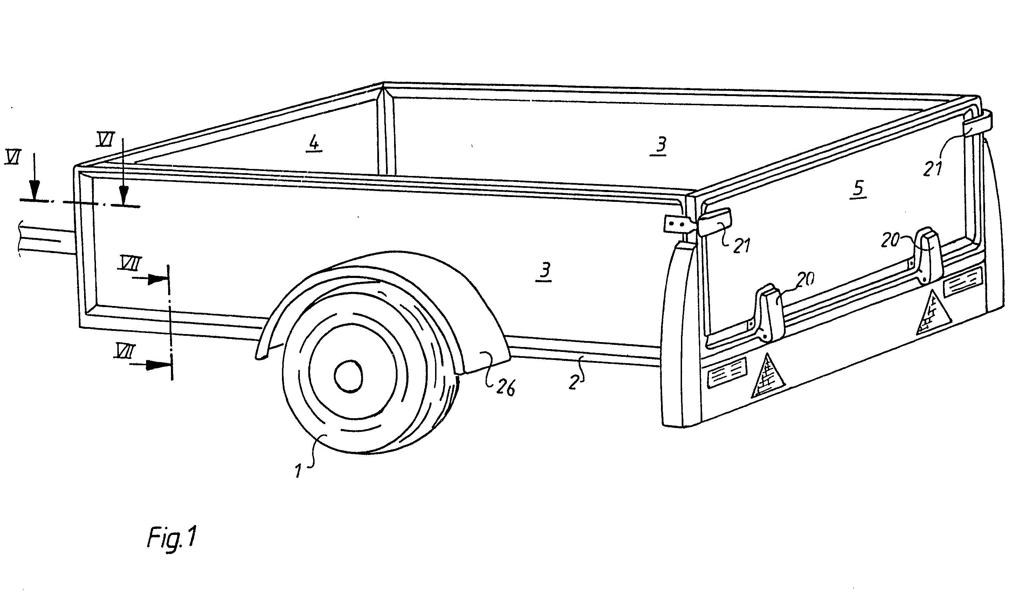

Fig. 1 die perspektivische Ansicht eines einachsigen Anhängers für Kraftfahrzeuge,

Fig. 2 die Draufsicht auf eine Seitenwand mit Metallrahmen,

Fig. 3 Aufsicht auf eine Seitenwand mit Metallrahmen anderer Ausführung,

Fig. 4 einen Schnitt durch einen Metallrahmen, entlang der Linie V-V der Fig. 2,

Fig. 5 einen Schnitt durch einen Metallrahmen einer anderen Ausführungsform, ebenfalls entlang dem Querschnitt V-V der Fig. 2,

Fig. 6 eine Eckverbindung zwischen zwei Seitenwandteilen,

Fig. 7 eine Eckverbindung zwischen Boden und Seitenwand, jeweils im Schnitt,

Fig. 8 eine andere Ausführungsform der Anbringung eines Verbindungsmittels im Schnitt,

Fig. 9 einen Längsschnitt zugehörig zur Fig. 8,

Fig. 10 Darstellung des Schnittes des Bodenplattenprofils.

Ein Fahrzeuganhänger nach der Erfindung besteht aus dem Fahrgestell mit den Rädern 1 sowie einer Plattform oder Bodenplatte 2, den Seitenwänden 3 und der Vorderwand 4 sowie der Rückwand 5. Die einzelnen Wände bestehen aus Holz, Holzmaterial oder auch aus einem anderen Material, und sie sind von Metallprofilen allseits umgeben.

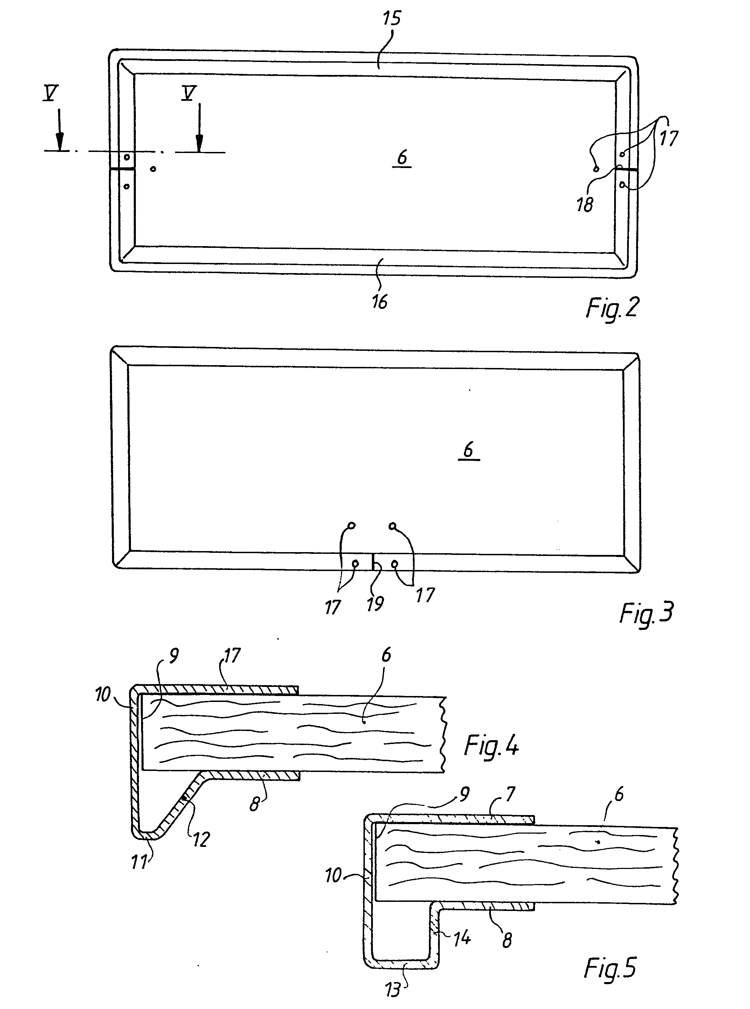

Entsprechend den Figuren 4 und 5 haben die Metallrahmen, die die Platte 6 umgeben, zwei miteinander parallele Schenkel, und zwar einen inneren Schenkel 7 und einen äusseren Schenkel 8. Von dem inneren Schenkel 7 ist das Rahmenprofil um die Kante 9 der Wandplatte herumgebogen bzw. abgewinkelt und bildet ein Mittelteil 10, das auf einer Seite diese Kante 9 der Platte 6 überragt. Mittelteil 10 und Schenkel 7 haben vorzugsweise gleiche Länge. Derjenige Teil des Mittelteils 10, der die Stärke der Platte 6 überragt, ist mindestens etwa so lang wie der halben Plattenstärke 6 entspricht. Nach dem Ausführungsbeispiel in Fig. 4 kann von dem äusseren Ende des Mittelteils 10 mit einem Doppelknick 11 eine Schrägverbindung 12 zu dem Schenkel 8 des Profils erfolgt sein. Zwischen dem Schenkel 8 und dem schrägen Teil 12 ist dann ein stumpfer Winkel vorhanden, während zwischen dem Mittelteil 10 und dem schrägen Teil 12 ein spitzer Winkel vorhanden ist.

Nach dem anderen Ausführungsbeispiel, der Fig. 5, ist von dem Mittelteil an dem Ende des überragenden Teiles zunächst eine rechtwinklige Abwinklung 13 vorgenommen, und von dieser führt eine weitere rechtwinklige Abwinklung 14 zu dem Schenkel 8 des Rahmenprofils.

In den Figuren 2 und 3 sind verschiedene Ausführungen der gesamten Anordnung des Rahmens dargestellt. Nach der Figur besteht der Rahmen, der eine Seitenwand 3, 4 oder 5 umgibt, aus zwei Teilen 15 und 16, die spiegelsymmetrisch sind und von oben bzw. unten über die Platte geschoben sind. Zur Verbindung sind Löcher 17 angeordnet, von denen zwei in den beiden gegeneinanderstossenden Endungen 18 der Rahmenteile liegen. Ein weiteres der Löcher 17 kann auch in der Platte 6 liegen. Diese der Verbindung der beiden Rahmenteile dienenden Löcher, dienen gleichzeitig zur Anbringung von Beschlägen, in dem hier vorliegenden Fall beispielsweise zur Anbringung eines Schliessbeschlages, in dem Falle, dass es sich um eine Rückwand 5 handelt.

Nach der Figur 3 ist der gesamte, die Platte 6 umgebende Rahmen durchgehend einteilig ausgebildet, an den Ecken sind Gehrungen eingeschnitten, so dass die die äusseren Rahmenkanten bildenden Teile der Profile abzuwinkeln sind. Lediglich eine einzige Stossstelle 19 ist vorhanden, die auch in diesem Falle wieder mittels eines, zweckmässig an dieser Stelle anzubringenden Beschlages, beispielsweise des Beschlages zur Verbindung mit der Deichsel, mit Löchern 17 versehen ist, wenn es sich um eine Vorderwand 4 handelt.

Ein hier nicht dargestelltes Ausführungsbeispiel ist auf eine Seitenwand 3 anwendbar. Danach ist der umgebende Profilrahmen für die Seitenwand 3 derart ausgebildet, dass er ähnlich wie bei Fig. 3 sämtliche Seitenkanten umgibt, an der unteren Seitenkante jedoch zwischen den Stössen 19 ein grösserer Abstand freibleibt. Hier wird ein gesondertes Profilrahmenteil eingesetzt, und an den in diesem Falle doppelten Stössen befinden sich die Anbringungspunkte für Befestigungsmittel des Schutzbleches 26, das den oberen Teil des Rades 1 umgibt.

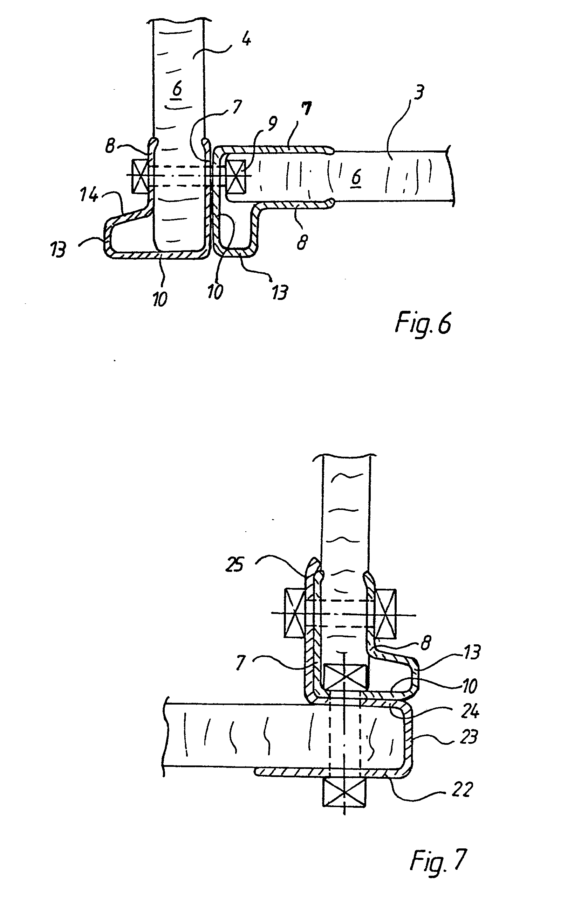

In der Figur 6 ist die Eckverbindung zweier Seitenwände dargestellt. Beispielsweise ist die Seitenwand 3 mit der Stirnwand 4 verbunden. Das Mittelteil 10 des Rahmenprofils der Seitenwand 3 ist gegen den etwa gleich langen Schenkel 7 des Rahmenprofils der Stirnwand 4 angelegt. Im Bereich der Stirnkante der die Seitenwand bildenden Platte 6 sind die beiden aufeinanderliegenden Teile mit einem Durchgangsloch versehen. Fluchtend zu diesem Durchgangsloch ist die Platte 6 der Stirnwand 4 mit einem Durchgangsloch versehen und ebenfalls der Schenkel 8 an der Aussenseite der Stirnwand. Schon bei der Herstellung der Seitenwand 3, vor dem Aufsetzen des Rahmens kann in einer Aussparung der Platte 6, die der Rahmenlochung zugeordnet ist, eine Schraube mit ihrem Kopf derart eingesetzt sein, dass sie mit ihrem Schaft aus dem Rahmen der Seitenwand herausragt. Der Schaft dieser Schraube wird durch die Durchgangslöcher der Stirnwand hindurchgeführt, und an der Aussenseite wird eine Mutter aufgeschraubt. Es kann auch innerhalb des Mittelteils 10 des Rahmens der Seitenwand eine Schweissmutter auf das Loch im Mittelteil 10 des Rahmens aufgesetzt sein, so dass von aussen her durch die vorbereitete Lochung in der Stirnwand 4 eine Schraube in diese Schweissmutter eingeschraubt werden kann. In jedem Fall ist der eine Teil dieser Schraubverbindung unsichtbar und gegen Beschädigungen geschützt. Der offenliegende Teil der Verbindung wird überragt durch den vorspringenden Teil des Rahmens der Stirnwand 4. Dieser vorspringende Teil besteht aus der Verlängerung des Mittelteils 10 sowie den abgewinkelten Teilen 13 und 14.

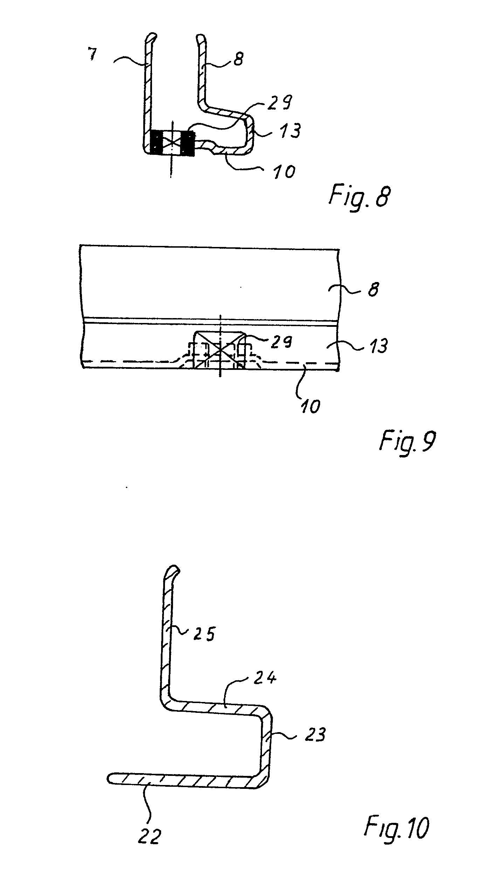

Bei der Verwendung einer Schweissmutter innerhalb des Rahmens der Seitenwand 3 kann diese auch entsprechend den Figuren 8 und 9 angeordnet sein. Im Bereich der Schweissmutter ist der Mittelteil 10 des Rahmens an der Profilwandung um etwa die Stärke dieser Wandung nach innen versetzt, so dass beispielsweise zwischen den beiden aufeinanderliegenden Rahmenteilen noch Raum für die Anbringung einer Zwischenlegscheibe besteht, die aus einem elastischen Material bestehen kann. Die Schweissmutter 29 ist vorzugsweise im Bereich der Kante 9 der eingesetzten Platte 6 angeordnet, und zu diesem Zweck ist die Platte an dieser Stelle mit einer Ausnehmung versehen. Die Schweissmutter 29 kann jedoch auch im Bereich der «Auswölbung» des Rahmenprofils von innen auf das verlängerte Mittelteil 10 gegenüber dem Profilteil 14 aufgesetzt sein, das bedingt, dass die Seitenwand 3 in der Verbindung weiter nach innen gerückt ist und die «Auswölbung» des Profils des Rahmens der Seitenwand 3 fluchtend mit dem Loch in den beiden Schenkeln 7 und 8 des Profils des Rahmens der Stirnwand 4 liegt.

Die «Auswölbung» überragt auch die Befestigungsmittel bzw. deren Köpfe für den Rahmen auf einer Seitenwand selbst. Diese Befestigungen werden im allgemeinen mit Nieten vorgenommen, bei denen die Köpfe flach linsenförmig ausgebildet sind, so dass dadurch keine wesentlichen Vorsprünge über die Ebene der Seitenwand nach aussen oder innen vorhanden sind. Bei einer Rahmenausbildung nach der Neuerung ist jedoch die Möglichkeit gegeben, die mit einer derartigen Nietenbefestigung des Profilrahmens verbundenen Nachteile zu vermeiden, es können vielmehr auch zur Befestigung des Rahmens an der Platte Schrauben verwendet werden, die auf den langen Schenkel 8 mit flachen Linsenköpfen aufliegen, während sie auf der gegenüberliegenden Seite, dem kurzen Schenkel 8, beispielsweise mit Kopfmuttern gesichert sind. Dass diese Kopfmuttern weiter vorstehen, spielt keine Rolle, denn sie sind geschützt und überdeckt durch die «Auswölbungen» des Rahmenprofils. Gleiches trifft zu für die Befestigung sämtlicher Beschläge, wie beispielsweise Scharniere 20 für die Rückwandklappe, und Befestigungen und Riegelverschlüsse 21 ebenfalls für die Rückwandklappe.

Die Ausbildung der Boden-Plattform und die Verbindung der Wände mit der Plattform ist auf die folgende Art durchgeführt: Bei dem unteren Schenkel 22 ist durch eine Abwinklung ein die Kante der Bodenplatte bzw. Plattform abdeckendes Mittelteil 23 erzeugt, von der wiederum der obere Schenkel 24 nach innen abgewinkelt ist. Daran schliesst sich eine hochstehende Abwinklung 25 an, deren Länge etwa der Länge des langen Flansches 7 der Rahmenprofile der Seitenwandungen entspricht. Aus der Figur 7 ist zu erkennen wie die Verbindung hergestellt ist. Es ist weiterhin daraus auch zu erkennen, dass der obere Schenkel 24 in der Länge etwa dem Mittelstück 10 der Seitenwandprofile entspricht, so dass beim Einsetzen der Seitenwände das Mittelteil 10 und der lange Flansch 7 parallel zu dem Schenkel 24 des Bodenprofils und dem hochstehenden Teil 25 des Bodenprofils verlaufen, wobei das letztere an seiner Oberkante mit einer nach aussen gerichteten Abwinklung versehen ist, die die entsprechende Abwinklung an dem langen Schenkel des Profils des Rahmens der Seitenwandungen übergreift. Beim Einsetzen der Seitenwandungen in das Profil des Bodens wird also eine teilweise formschlüssige Anlage erreicht. Die Verbindung erfolgt mittels Schrauben oder Schweissmuttern 29, wie das zuvor schon in Zusammenhang mit der Verbindung der Seitenwände untereinander anhand der Figur 6 beschrieben ist. Eine weitere Verbindung kann oberhalb dieser Eckverbindung mittels Durchführen einer Schraube durch die parallel zueinander liegenden Schenkel der Seitenwandprofile und das hochstehende Teil 25 des Bodenprofils erfolgen. Es ist damit eine besonders gute Sicherung dieser Eckverbindung erreicht. Die obere Verbindung kann zusätzlich benutzt werden, um beispielsweise die seitlichen Kotflügel 26 zu befestigen.

**Patentansprüche**

1. Ein- oder tandemachsiger Anhänger für Kraftfahrzeuge, mit einer Plattform (2), die von Seitenwänden (3, 4, 5) begrenzt ist, die aus mit Metall-Profil-Rahmen umgebenen Platten (6) bestehen, wobei das Profil der Rahmen zueinander parallele Schenkel (7, 8) aufweist zur Auflage auf der Aussen- und Innenfläche der Platte im Randbereich, wobei das Profil ein von einem Schenkel (7) abgewinkeltes Mittelteil (10) aufweist, das gegen die Kante (9) der Platte anliegt und in den anderen Schenkel (8) ausläuft, wobei der Metall-Profil-Rahmen an seinen Schenkeln (7, 8) den Ecken der zu umrahmenden Platte entsprechend, mit Gehrungsschnitten versehen und abgewinkelt ist, dadurch gekennzeichnet, dass das Mittelteil (10) des Profils die Kante der Platte auf einer Seite um einen Betrag überragt, der mindestens etwa der halben Plattenstärke entspricht und zur Platte hin abgewinkelt, in den anderen Schenkel (8) ausläuft, wobei zumindest das Mittelteil (10) des Profils des Rahmens ohne Unterbrechung in den Rahmenecken abgewinkelt ist, und dass die Befestigung der Rahmen an der Platte mittels quer durchgeführter Schrauben erfolgt und zur Herstellung einer rechtwinkligen Verbindung zweier Seitenwände (3, 4) entweder die quer durch die Platte (6) einer ersten Seitenwand (4) und daran anliegende Profilschenkel geführte Schraube durch ein im Bereich der Stirnkante der Platte (6) einer zweiten Seitenwand (3) im Profil angeordnetes Durchgangsloch in eine im Innern des Profils angeordnete Schweissmutter eingeschraubt ist, oder bei in das Profil an der Platte (6) der zweiten Seitenwand (3) eingesetztem Schraubenkopf der Schraubenschaft durch das im Bereich der Stirnkante der zweiten Platte im Profil angeordnete Durchgangsloch und sodann im Bereich der anliegenden Schenkel durch die Platte (6) der ersten Seitenwand geführt und ausserhalb dieser Platte mit einer Mutter versehen ist.

2. Anhänger nach Anspruch 1, dadurch gekennzeichnet, dass die Abwinklung (13) des Mittelteils (10) des Profils des Rahmens rechtwinklig ausgebildet ist und mit einer weiteren rechtwinkligen Abwinklung (14) gegen die Platte (6) gerichtet, unmittelbar vor der Ebene der Platte (6) mit einer rechtwinkligen Abwinklung nach aussen in den Schenkel (8) übergeht.

3. Anhänger nach Anspruch 1, dadurch gekennzeichnet, dass die Abwinklung (12) des Mittelteils (10) des Profils des Rahmens spitzwinklig ausgebildet ist und unmittelbar vor der Ebene der Platte (6) mit einer entsprechend stumpfwinkligen Abwinklung nach aussen in den Schenkel (8) übergeht.

4. Anhänger nach Anspruch 1 und 3, dadurch gekennzeichnet, dass vorzugsweise auf einer Langseite der Platte (6) das Rahmenprofil im Abstand von den Ecken der Platte endet und zwischen diese Enden ein gerades Profilstück eingesetzt ist.

5. Anhänger nach Anspruch 4, dadurch gekennzeichnet, dass die Enden des die Platte (6) umgebend gewinkelten Rahmenteils an der Stelle der Platte liegen, an der sie von der Hälfte eines aufgeschraubten oder -genieteten Beschlages überdeckt sind, dessen andere Hälfte die Enden des eingesetzten, geraden Profilstückes überdeckt.

6. Anhänger nach Anspruch 1, dadurch gekennzeichnet, dass der Rahmen aus zwei Teilen (15 und 16) besteht, deren Enden an zwei einander gegenüberliegenden Seitenkanten der Platte (6) gegeneinanderstossen.

7. Anhänger nach Anspruch 1, dadurch gekennzeichnet, dass der Rahmen aus einem Teil besteht und mit seinen beiden Enden (19) im Verlauf einer Seitenkante der Platte (6) einanderstösst.

8. Anhänger nach Anspruch 1 und einem der vorstehenden Ansprüche, dadurch gekennzeichnet, dass an den Stossstellen der Enden des Rahmens Beschläge angeordnet sind, wie Scharniere (20), Schliesshaken (21) o.dgl., die mit Befestigungslaschen je zur Hälfte die beiden aneinanderstossenden Rahmenenden überdecken und deren Befestigungsmittel in Form von Schrauben, Nieten o.dgl. durch die auf der Platte (6) aufliegenden Schenkel (7 und 8) des Beschlages hindurchgeführt sind.

9. Anhänger nach Anspruch 1, dadurch gekennzeichnet, dass Beschläge und/oder Verbindungsmittel mittels Schrauben, Nieten o.dgl. an dem Rahmen befestigt sind, die durch Löcher hindurchgeführt sind, die in dem über die Plattenkante hinausstehenden Teile des Rahmenprofils, parallel zur Plattenebene verlaufend, angeordnet sind.

10. Anhänger nach Anspruch 1, dadurch gekennzeichnet, dass im Randbereich der Platte (6) Verbindungsschrauben mit ihren Schraubenköpfen oder Schweissmuttern (19) fest derart eingesetzt sind, dass sie von dem über die Plattenkante (9) hinausstehenden Teil (13, 14 oder 11, 12) des Rahmenprofils überdeckt sind.

11. Anhänger nach Anspruch 1 und einem der vorstehenden Ansprüche, dadurch gekennzeichnet, dass im Bereich der in das Rahmenprofil eingesetzten Schrauben, Muttern (29) oder Nieten eine Einprägung vorgesehen ist, die die Profilwandung um etwa ihre Stärke nach innen versetzt.

12. Anhänger nach Anspruch 1 und einem der vorstehenden Ansprüche, dadurch gekennzeichnet, dass die Aussenkanten der beiden zueinander parallelen Schenkel (7 und 8) gegeneinander nach innen gebogen sind.

13. Anhänger nach Anspruch 1 und einem der vorstehenden Ansprüche, gekennzeichnet durch ein Rahmenprofil für die Anhänger-Plattform, das im wesentlichen als, die Plattform an ihrer Kanten umgreifendes U-Profil ausgebildet ist, mit dem oberen Schenkel (24) in der Breite etwa dem Mittelteil (10) des Rahmenprofils der aufstehenden Seitenwände (3) entsprechend und dahinter nach oben abgewinkelt (25) und bis über die Höhe des Wandrahmenprofils und dessen Schenkel (7) reichend, während der untere Schenkel (22) die Anlagefläche des oberen (24) an der Plattform überragt.

14. Anhänger nach Anspruch 13, dadurch gekennzeichnet, dass der nach oben abgewinkelte Schenkel (24) mit der Seitenwand (3) mittels Schrauben oder Nieten verbunden ist, die diesen Schenkel sowie die beiden Schenkel (7 und 8) der Seitenwandumrahmung und die dazwischenliegende Platte (6) durchdringen.

**Claims**

1. Single- or double-axle trailer for motor vehicles having a platform (2) being limited by side walls (3, 4, 5) consisting of boards (6) surrounded by metal section frames, the section of the frames exhibiting wings (7, 8) being parallel to each other for supporting the outer and inner surfaces of the boards in the edge areas, the section having a central part (10) bent from a wing (7), said central part (10) abutting against edge (9) of the board and extending towards the other wing (8), the metal section frame being provided at its wings (7, 8) with miter cuts and being bent corresponding to the board to be framed, characterized by that central part (10) of the section projects above the edge of the board on one side by an amount corresponding to at least half the board thickness and being bent towards the board, extending into the other wing (8), at least central part (10) of the frame section being bent without any interruption in the frame corners, and that the mounting of the frames on the board is achieved by means of transversely arranged screws and that, for obtaining a rectangular connection of two side walls (3, 4) either the screw passing transversely through board (6) of a first side wall (3) and section wings abutting-against is screwed through a through-hole arranged in the area of the front face of board (6) of a second side wall (3) into a welding nut arranged within the section or, for a screw head being inserted into the section at board (6) of the second side wall (3), the screw shaft extends through the through-hole arranged in the section in the area of the front face of the second board and then in the area of the abutting-against wings through board (6) of the first side wall and is provided outside said board with a nut.

2. Trailer according to claim 1, characterized by that the bending (13) of central part (10) of the frame section is shapped rectangularly and, being directed towards board (6), with another rectangular bending (14), passes over directly before the plane of board (6) with a rectangular outward bending into wing (8).

3. Trailer according to claim 1, characterized by that the bending (12) of central part (10) of the frame section is shaped acute-angled and passes over directly before the plane of board (6) with a corresponding obtuse-angled outward bending into wing (8).

4. Trailer according to claims 1 and 3, characterized by that preferably on a longitudinal side of board (6), the frame section ends spaced from the board corners and that, between said ends, a straight section piece is inserted.

5. Trailer according to claim 4, characterized by that the ends of the bent frame part surrounding board (6) are arranged at such locations of the board, where they are covered by one half of a screwed-on or riveted-on fixture, the other half of which covering the ends of the inserted straight section piece.

6. Trailer according to claim 1, characterized by that the frame consists of two parts (15 and 16), the ends of which rest against each other on two side edges of board (6) being arranged opposite to each other.

7. Trailer according to claim 1, characterized by that the frame consists of one part and that its two ends (19) rest against each other in the course of a side edge of board (6).

8. Trailer according to claim 1 and to one of the preceding claims, characterized by that at the junction of the frame ends, fixtures are provided, as hinges (20), locking hooks (21) or the like, said fixtures with attachment straps covering by one half each the frame ends abutting against each other, and the attachment means of which in form of screws, rivets or the like pass through the fixture wings (7 and 8) resting on board (6).

9. Trailer according to claim 1, characterized by that fixtures and/or attachment means are mounted to the frame by means of screws, rivets or the like, which extend through holes being arranged in the frame section projecting above the board edge, parallel to the plane of the board.

10. Trailer according to claim 1, characterized by that, in the edge area of board (6), attachment screws with their screw heads or welding nuts (19) are fixed such that they are covered by the part (13, 14 or 11, 12) of the frame section projecting above the board edge (9).

11. Trailer according to claim 1 and one of the preceding claims, characterized by that, in the area of the screws, nuts (29) or rivets inserted into the frame section, an impression is provided displacing the section wall inward approximately by its thickness.

12. Trailer according to claim 1 and to one of the preceding claims, characterized by that the outer edges of wings (7 and 8) being parallel to each other are bent inward with respect to each other.

13. Trailer according to claim 1 and to one of the preceding claims, characterized by a frame section for the trailer platform being designed substantially as U section surrounding the platform at its edges, corresponding with the upper wing (24) in its width approximately to central part (10) of the frame section of vertical side walls (3) and, behind that, being bent (25) upward and extending over the height of the wall frame section and its wings (7), whereas the lower wing (22) projects above the contact surface of the upper wing (24) at the platform.

14. Trailer according to claim 13, characterized by that wing (24) being bent upward is connected to side wall (3) by means of screws or rivets, extending through said wing as well as through wings (7 and 8) of the side wall framing and interposed board (6).

**Revendications**

1. Remorque à deux ou quatre roues pour des véhicules à moteur, avec une plateforme (2) limitée par des parois latérales (3, 4, 5), qui sont composées des plaques (6) entourées par des cadres en profilés en métal, le profilé des cadres présentant des ailes (7, 8) parallèle l'une à l'autre pour être couché sur la face extérieure et intérieure de la plaque dans la zone des bords, le profilé présentant une partie centrale (10) coudée de l'aile (7), cette partie centrale étant collée contre le bord (9) de la plaque et changeant en l'autre aile (8), le cadre en profilés en métal étant prévu à ses ailes (7, 8) avec des coupes biaises correspondant aux coins de la plaque à encadrer et étant coudé, caractérisé en ce que la partie centrale (10) du profilé dépasse le bord de la plaque à un côté par une distance, qui correspond au moins environ à la moitié de l'épaisseur de la plaque et qui change, coudée vers la plaque, en l'autre aile (8), au moins la partie centrale (10) du profilés du cadre étant coudée sans interruption aux coins du cadre, et que la fixation des cadres à la plaque est effectuée à l'aide de vis traversant latéralement et, pour effectuer une jonction rectangulaire de deux parois latérales (3, 4), la vis traversant la plaque (6) d'une première paroi latérale (4) et ailes profilées y étant collées est vissée à travers d'un trou outre disposé dans la zone du bord frontal de la plaque (6) d'une deuxième paroi latérale (3) au profilé dans un écrou à souder disposé à l'intérieur du profilé, ou dans le cas de la tête de vis étant insérée dans le profilé à la plaque (6) de la deuxième paroi latérale (3), la tige de vis est guidée à travers du trou outre disposé dans la zone du bord frontal de la deuxième plaque au profilé et puis dans la zone des ailes collées à travers de la plaque (6) de la première paroi latérale et est prévue au dehors de cette plaque avec une vis.

2. Remorque selon revendication 1, caractérisé en ce que l'angle (13) de la partie centrale (10) du profilé du cadre est un angle droit et se change avec un autre angle droit (14) vers la plaque (6) directement avant le plan de la plaque (6) avec un angle droit vers l'extérieur en l'aile (8).

3. Remorque selon revendication 1, caractérisé en ce que l'angle (13) de la partie centrale (10) du profilé du cadre est un angle aigu et se change directement avant le plan de la plaque (6) avec un angle correspondamment obtus vers l'extérieur en l'aile (8).

4. Remorque selon revendication 1 et 3, caractérisé en ce que de préférence au grand côté de la plaque (6), le profilé de cadre se termine en distance des coins de la plaque et qu'une pièce profilée droite est insérée entre ces bouts.

5. Remorque selon revendication 4, caractérisé en ce que les bouts de la pièce coudée du cadre entourant la plaque (6) sont disposés à cette position de la plaque, où ils sont couverts de la moitié d'une armature vissée ou rivée, l'autre moitié de laquelle couvrant les bouts de l'insérée pièce profilé droite.

6. Remorque selon revendication 1, caractérisé en ce que le cadre est composé de deux pièces (15 et 16), les bouts desquelles aboutent l'un à l'autre à deux arrêtes latérales opposées de la plaque (6).

7. Remorque selon revendication 1, caractérisé en ce que le cadre est composé d'une seule pièce et aboute avec ses deux bouts (19) dans le cours d'une arête latérale de la plaque (6).

8. Remorque selon revendication 1 et une des revendications précédentes, caractérisé en ce qu'aux joints des bouts du cadre, des armatures sont disposées, comme par exemple charnières (20), crochets de serrage (21) ou d'autres semblables, qui couvrent avec des colliers de fixation chacune par moitié les deux bouts aboutants du cadre et les moyens de fixation desquelles en forme de vis, rivets ou d'autres semblables traversent les ailes (7 et 8) reposant sur la plaque (6) de l'armature.

9. Remorque selon revendication 1, caractérisé en ce que les armatures et/ou moyens de fixations sont fixés par des vis, rivets ou d'autres semblables au cadre, qui traversent par des trous disposés dans les parties du profilé de cadre, parallèle au plan de la plaque, ces parties dépassant le bord de la plaque.

10. Remorque selon revendication 1, caractérisé en ce que dans la zone du bord de la plaque (6), des vis de fixation sont insérées avec leurs têtes de vis ou écrous à souder (19) de telle manière fixe, qu'elles sont couvertes de la partie (13, 14 ou 11, 12) du profilé du cadre, cette partie dépassant le bord de la plaque (9).

11. Remorque selon revendication 1 et une des revendications précédentes, caractérisé en ce que dans la zone des vis, écrous (29) ou rivets insérés dans le profilé du cadre, une impression est prévue, qui déplace la paroi du profilé vers l'intérieur par environ son épaisseur.

12. Remorque selon revendication 1 et une des revendications précédentes, caractérisé en ce que les bords extérieurs des ailes (7 et 8) parallèle l'une à l'autre sont courbés vers l'intérieur.

13. Remorque selon revendication 1 et une des revendications précédentes, caractérisé en ce qu'un profilé du cadre pour la plateforme de la remorque, qui est formé en substance comme profilé en U entourant la plateforme à ses bords, est coudé (25) avec l'aile supérieure (24) en largeur correspondant environ à l'épaisseur de la partie centrale (10) du profilé du cadre des parois latérales deboutes (3) et derrière vers le supérieur et dépasse la hauteur du profilé du cadre de parois et ses ailes (7), tandis que l'aile inférieure (22) dépasse la face de collage de la supérieure (24) à la plateforme.

14. Remorque selon revendication 13, caractérisé en ce que l'aile (24) coudée vers le supérieur est fixée à la paroi latérale (3) à l'aide de vis ou rivets, qui traversent cette aile et les deux ailes (7 et 8) du cadre latéral et la plaque intermédiaire (6).

Fig.1

15

V   V

17

6

18

16

*Fig. 2*

6

17   19   17

*Fig. 3*

9   17   6

10

8

*Fig. 4*

12

11

9   7   6

10

14   8

13

*Fig. 5*

Fig. 6

Fig. 7

Fig. 8

Fig. 9

Fig. 10